# EUROPÄISCHE PATENTSCHRIFT

(11) **EP 3 900 966 B1**
(45) Veröffentlichungstag und Bekanntmachung des Hinweises auf die Patenterteilung: **04.06.2025**
(21) Anmeldenummer: 21168377.6
(22) Anmeldetag: 14.04.2021
(51) Int. Cl.: B60K 1/00, B60K 17/04, B60K 17/16, B60K 17/344, B60K 17/36

(54) **ACHSANTRIEB**
AXLE DRIVE
ENTRAÎNEMENT D'ESSIEUX

(30) Priorität: 24.04.2020 DE 102020111296
(43) Veröffentlichungstag der Anmeldung: 27.10.2021
(73) Patentinhaber: Kessler & Co. GmbH & Co. KG, 73453 Abtsgmünd (DE)
(72) Erfinder: Bittlingmaier, Günter, 73432 Aalen-Ebnat (DE)
(74) Vertreter: Manitz Finsterwald Patent- und Rechtsanwaltspartnerschaft mbB

(56) Entgegenhaltungen:
- EP-A1- 3 047 998
- EP-A2- 2 574 490
- CN-U- 202 783 364
- US-B2- 8 684 125

## Beschreibung

Die Erfindung betrifft einen Achsantrieb für ein knickgelenktes Fahrzeug, das zumindest eine antreibbare erste Fahrzeugachse und eine antreibbare zweite Fahrzeugachse sowie ein dazwischen vorgesehenes Knickgelenk aufweist.

Die Erfindung betrifft ferner einen Antriebsstrang eines knickgelenkten Fahrzeugs, welcher eine antreibbare erste Fahrzeugachse und eine antreibbare zweite Fahrzeugachse umfasst, die über ein zwischen der ersten Fahrzeugachse und der zweiten Fahrzeugachse angeordnetes Knickgelenk miteinander verbunden sind.

Beispielsweise sind Achsantriebe aus EP 2 574 490 A2 und EP 3 047 998 A1 bekannt, wobei diese Achsantriebe jedoch nicht im Zusammenhang mit knickgelenkten Fahrzeugen beschrieben sind. Ein knickgelenktes Fahrzeug mit einem Achsantrieb zum Antreiben zweier Fahrzeugachsen ist ferner in CN 202 783 364 U gezeigt.

Knickgelenkte Fahrzeuge mit zumindest zwei Fahrzeugachsen können den jeweiligen Fahrzeugachsen zugeordnete Fahrzeugteile aufweisen, die über ein Knickgelenk miteinander verbunden und gemeinsam mit den Achsen gegeneinander verschwenkbar sind. Beispielsweise kann ein Führerhaus eines Radladers oberhalb einer Fahrzeugachse angeordnet sein, während eine Schaufel des Radladers der anderen Fahrzeugachse zugeordnet ist. Eine Richtungsänderung kann dabei durch ein Knicken des Knickgelenks und das damit einhergehende Verschwenken der Fahrzeugachsen und der Fahrzeugteile gegeneinander erreicht werden, um beispielsweise eine Kurve im Wesentlichen bogenförmig durchfahren zu können.

Durch die Möglichkeit, die Achsen eines knickgelenkten Fahrzeugs gegeneinander zu verschwenken, können sich derartig gelenkte Fahrzeuge als wendig erweisen und insbesondere auch ein Rangieren bei beschränkten Platzverhältnissen ermöglichen. Häufig können Bau- oder Nutzfahrzeuge mit solchen Knickgelenken vorgesehen sein, um beispielsweise ein Führerhaus und eine Mulde eines Muldenkippers gegeneinander verschwenken zu können und dadurch auch enge Kurven durchfahren zu können. Insbesondere können knickgelenkte Fahrzeuge ferner im Untertagebau Verwendung finden, wobei in der Regel wendige Fahrzeuge zum Transport der gewonnenen Rohstoffe durch die meist engen Gänge benötigt werden.

Indem solche Fahrzeuge ferner zumindest zwei antreibbare Fahrzeugachsen aufweisen können, kann deren Fahrverhalten auch in schwierigem Gelände, wie beispielsweise in unebenen oder feuchten Gängen im Untertagebau, verbessert werden. Gerade in Anbetracht des häufigen Einsatzes solcher Fahrzeuge als Bau- oder Nutzfahrzeuge kann das Antreiben beider Fahrzeugachsen häufig gewünscht bzw. erforderlich sein.

Um zumindest zwei Fahrzeugachsen mittels eines Achsantriebs antreiben zu können, ist jedoch eine erhöhte Anzahl an Bauteilen notwendig, was mit einer vergrößerten Ausdehnung des Achsantriebs einhergeht. Insbesondere können dabei Verteilergetriebe erforderlich sein, um die Antriebsleistung einer einzigen Antriebsquelle auf die jeweiligen Fahrzeugachsen aufteilen zu können. Wenn allerdings das Verteilergetriebe oder ein Versatztrieb des Verteilergetriebes (z.B. vertikal ausgerichtete Stirnradstufe) zwischen den Fahrzeugachsen angeordnet wird, muss der Abstand zwischen den Fahrzeugachsen vergrößert werden, um den erforderlichen Freiraum für das Knickgelenk einzuhalten und ein Anschlagen bzw. Blockieren des Knickgelenks, insbesondere bei großen Knickwinkeln bzw. bei dem Durchfahren enger Kurven, zu verhindern. Jedoch wirkt sich ein vergrößerter Achsabstand einschränkend auf die Wendigkeit des Fahrzeuges aus.

Es ist daher eine Aufgabe der Erfindung, einen Achsantrieb für ein knickgelenktes Fahrzeug zu schaffen, der das Antreiben zumindest einer ersten Fahrzeugachse und einer zweiten Fahrzeugachse bei geringem Abstand zwischen den Achsen ermöglicht, um eine hohe Wendigkeit des Fahrzeuges zu erreichen und die dazu notwendigen großen Knickwinkel in dem Knickgelenk zu ermöglichen.

Diese Aufgabe wird gelöst durch einen Achsantrieb mit den Merkmalen des Anspruchs 1.

Der Achsantrieb umfasst
- einen Antriebswellenabschnitt mit einem antriebsseitigen Ende, das einen Eingang zum Empfangen einer Antriebsleistung von einem Elektromotor bildet,
- eine Abtriebswelle mit einem abtriebsseitigen Ende, an dem ein Kegelrad zur antriebswirksamen Kopplung mit der ersten Fahrzeugachse angeordnet ist, und
- eine Durchtriebswelle mit einem abtriebsseitigen Ende, das einen Ausgang zur antriebswirksamen Kopplung mit der zweiten Fahrzeugachse bildet,
wobei der Eingang und der Ausgang des Achsantriebs bezüglich einer Längsrichtung des Fahrzeugs entgegengesetzt zueinander angeordnet sind und der Ausgang bezüglich der Längsrichtung hinter dem Eingang angeordnet ist. Ferner sind der Antriebswellenabschnitt, die Abtriebswelle und die Durchtriebswelle parallel zu der Längsrichtung ausgerichtet, wobei der Antriebswellenabschnitt sowohl mit der Abtriebswelle als auch mit der Durchtriebswelle antriebswirksam gekoppelt oder koppelbar ist, so dass ein Antriebsleistungsfluss, der sich von dem Eingang aus durch den Achsantrieb erstreckt, an einem Verzweigungspunkt in einen zum Ausgang führenden ersten Teilfluss und in einem zum Kegelrad führenden zweiten Teilfluss verzweigt, um empfangene Antriebsleistung zumindest anteilig zu der ersten Fahrzeugachse und/oder zu der zweiten Fahrzeugachse zu übertragen. Der Verzweigungspunkt des Antriebsleistungsflusses ist dabei bezüglich der Längsrichtung des Fahrzeugs vor dem Kegelrad vorgesehen und die Durchtriebswelle ist vertikal versetzt zu der Abtriebswelle angeordnet, um die erste Fahrzeugachse zu überqueren oder zu unterqueren.

Indem der Antriebswellenabschnitt, die Abtriebswelle und die Durchtriebswelle parallel zu der Längsrichtung ausgerichtet sind, erstreckt sich auch der Achsantrieb vornehmlich entlang dieser Richtung. Die erste Fahrzeugachse kann bezüglich der Längsrichtung des Fahrzeugs vor der zweiten Fahrzeugachse angeordnet sein. Dabei kann die Längsrichtung insbesondere in eine Vorwärtsfahrtrichtung des Fahrzeugs oder entgegen dieser weisen. Die erste Fahrzeugachse kann somit bei einer in Vorwärtsfahrtrichtung des Fahrzeugs weisenden Längsrichtung einer Hinterachse oder, bei entgegengesetzter Ausrichtung der Längsrichtung, einer Vorderachse des Fahrzeugs entsprechen.

Um sowohl die erste Fahrzeugachse als auch die zweite Fahrzeugachse antreiben zu können, weist der Achsantrieb zunächst einen Antriebswellenabschnitt zum Empfangen von Antriebsleistung auf. Dieser Antriebswellenabschnitt ist mit der Abtriebswelle und mit der Durchtriebswelle antriebswirksam gekoppelt oder koppelbar, wobei über die Abtriebswelle ein Anteil der empfangenen Antriebsleistung zu der ersten Fahrzeugachse und über die Durchtriebswelle ein Anteil der empfangenen Antriebsleistung zu der zweiten Fahrzeugachse geleitet werden kann. Dabei kann der Antriebswellenabschnitt beispielsweise einteilig mit der Durchtriebswelle oder der Abtriebswelle ausgebildet sein, wobei der Antriebswellenabschnitt auch als gesonderte Welle vorgesehen sein kann, die über ein weiteres Bauteil antriebswirksam mit der Abtriebswelle und der Durchtriebswelle gekoppelt oder koppelbar ist.

Durch den vertikalen Versatz der Abtriebswelle und der Durchtriebswelle zueinander, kann die Durchtriebswelle gegenüber der Abtriebswelle nach oben oder nach unten versetzt angeordnet sein und entsprechend auch oberhalb oder unterhalb der Abtriebswelle verlaufen. Insbesondere kann ein solcher Versatz über eine Stirnradstufe erfolgen, mittels derer die Durchtriebswelle und die Abtriebswelle antriebswirksam miteinander gekoppelt sind. Auch der genannte Verzweigungspunkt, an welchem der Antriebsleistungsfluss, der sich von dem Eingang aus durch den Achsantrieb erstreckt, in einen zum Ausgang führenden ersten Teilfluss und in einen zum Kegelrad führenden Teilfluss verzweigt, kann an einer solchen die Abtriebswelle mit der Durchtriebswelle verbindenden Stirnradstufe vorgesehen sein. Der genannte vertikale Versatz kann ausschließlich vertikal sein, so dass sich die Abtriebswelle und die Durchtriebswelle innerhalb derselben vertikalen Ebene erstrecken und die Durchtriebswelle lotrecht über oder unter der Abtriebswelle angeordnet ist. Dies ist jedoch nicht zwingend. Grundsätzlich kann der Versatz der Durchtriebswelle relativ zu der Abtriebswelle zusätzlich zu einer vertikalen Komponente auch eine horizontale Komponente quer zur Längsrichtung des Fahrzeugs aufweisen, so dass die Durchtriebswelle relativ zu der Abtriebswelle nicht nur vertikal, sondern auch seitlich versetzt ist. Dabei kann die Richtung des Versatzes beispielsweise einen Winkel von etwa 45° relativ zur Vertikalen aufweisen.

Dieser Verzweigungspunkt ist bezüglich der Längsrichtung des Fahrzeugs - d.h. entlang der genannten Längsrichtung des Fahrzeugs betrachtet - vor dem Kegelrad angeordnet, über welches die Abtriebswelle mit der ersten Fahrzeugachse (insbesondere mit einem Achsdifferential der ersten Fahrzeugachse) antriebswirksam gekoppelt ist. Hierdurch können sämtliche Komponenten des Achsantriebes zum anteiligen Übertragen der empfangenen Antriebsleistung auf die erste Fahrzeugachse und die zweite Fahrzeugachse bezüglich der Längsrichtung vor dem Kegelrad und damit vor der ersten Fahrzeugachse angeordnet sein. In dem Raum zwischen den Fahrzeugachsen kann sich somit (abgesehen natürlich von dem Knickgelenk) ausschließlich die entweder oberhalb oder unterhalb der Abtriebswelle verlaufende und entsprechend oberhalb oder unterhalb der ersten Fahrzeugachse führbare Durchtriebswelle erstrecken, um den für die zweite Fahrzeugachse vorgesehenen Anteil der Antriebsleistung auf den Ausgang des Achsantriebs zu übertragen, jedoch keine weitere Komponente des Achsantriebs.

Der Achsantrieb bzw. dessen Komponenten, die ein Antreiben beider Fahrzeugachsen ermöglichen, können durch diese Anordnung zumindest nahezu vollständig bezüglich der Längsrichtung des Fahrzeuges vor der ersten Fahrzeugachse angeordnet sein. Der Raum zwischen der ersten Fahrzeugachse und der zweiten Fahrzeugachse wird folglich durch den Achsantrieb nicht beansprucht und kann für die Anordnung eines Knickgelenks freigehalten werden, so dass dieses auch bei einem geringen Achsabstand zwischen den Fahrzeugachsen positioniert werden kann, ohne dass große Knickwinkel durch den Achsantrieb blockiert werden. Dadurch können auch knickgelenkte Fahrzeuge, die zumindest zwei antreibbare Fahrzeugachsen aufweisen, mit kurzem Achsabstand ausgebildet werden, um die gewünschte Wendigkeit des Fahrzeuges erreichen zu können und ein Fahren und Rangieren bei beschränkten Platzverhältnissen zu ermöglichen.

Weitere Ausführungsformen sind den abhängigen Ansprüchen, der Beschreibung und den Zeichnungen zu entnehmen.

Bei einigen Ausführungsformen kann der Antriebswellenabschnitt entweder zu der Abtriebswelle oder zu der Durchtriebswelle koaxial angeordnet sein. Insbesondere kann der Antriebswellenabschnitt dabei koaxial zu der Durchtriebswelle angeordnet sein, so dass auch der Eingang und der Ausgang koaxial zueinander angeordnet sein können. Der zum Antreiben der zweiten Fahrzeugachse vorgesehene Anteil an dem Eingang empfangener Antriebsleistung kann dabei durch den Antriebswellenabschnitt und die dazu koaxiale Durchtriebswelle geradlinig entlang der Längsrichtung von dem Eingang zu dem Ausgang geleitet werden. Eine Veränderung der Richtung des Antriebsleistungsflusses kann dadurch ausschließlich an dem Verzweigungspunkt vorgesehen sein, um den für den Antrieb der ersten Fahrzeugachse vorgesehenen Anteil zu der vertikal nach oben oder nach unten versetzten Abtriebswelle leiten zu können.

Ferner kann der Antriebswellenabschnitt entweder mit der Durchtriebswelle oder mit der Abtriebswelle einteilig ausgebildet sein. Der Antriebswellenabschnitt kann somit ein antriebsseitiges Ende der Durchtriebswelle oder der Abtriebswelle bilden, über welches an dem Eingang empfangene Antriebsleistung direkt auf die Durchtriebswelle oder die Abtriebswelle geleitet wird. Durch diese einteilige Ausbildung des Antriebswellenabschnittes mit der Durchtriebswelle oder der Abtriebswelle kann einer der Teilflüsse des Antriebsleistungsflusses mit lediglich einem Bauteil von dem Eingang an den jeweiligen Endpunkt, den Ausgang oder das Kegelrad, geleitet werden. Entsprechend sind weitere Bauteile lediglich zur Übertragung eines Anteils der empfangenen Antriebsleistung von der Durchtriebswelle auf die Abtriebswelle bzw. umgekehrt erforderlich, um ein Antreiben beider Fahrzeugachsen zu erreichen. Dies ermöglicht es, die Anzahl benötigter Bauteile zu minimieren und den Achsantrieb möglichst kompakt auszubilden.

Es kann vorgesehen sein, dass der Antriebswellenabschnitt mit der Abtriebswelle permanent antriebswirksam gekoppelt ist. Sofern eine solche permanente antriebswirksame Kopplung vorgesehen ist, erfolgt keine Unterbrechung des Antriebsleistungsflusses bzw. des zum Antreiben der ersten Fahrzeugachse bestimmten Teilflusses von dem Antriebswellenabschnitt zu der Abtriebswelle. Bei Ausführungsformen mit einer solchen permanenten Kopplung ist folglich insbesondere keine Trennkupplung zwischen dem Antriebswellenabschnitt und der Abtriebswelle vorgesehen, wobei jedoch beispielsweise eine Schaltkupplung ohne Neutralstellung und/oder ein Differential, beispielsweise ein Längsdifferential zum Verteilen von Drehmomenten zwischen den Fahrzeugachsen, vorgesehen sein kann. Die erste Fahrzeugachse kann somit stets und situationsunabhängig antreibbar sein, um das Fahrzeug bewegen zu können.

Bei einigen Ausführungsformen können die Abtriebswelle und die Durchtriebswelle über eine Stirnradstufe antriebswirksam miteinander gekoppelt sein. Insbesondere kann dabei genau eine Stirnradstufe vorgesehen sein, so dass die Abtriebswelle und die Durchtriebswelle direkt, ohne weitere Welle dazwischen, miteinander gekoppelt sein können. Dabei kann ein an der Durchtriebswelle vorgesehenes Zahnrad in direktem Eingriff mit einem an der Abtriebswelle vorgesehenen Zahnrad stehen, so dass ein sich von dem Eingang durch den Achsantrieb zu dem Ausgang erstreckender Antriebsleistungsfluss an der Stirnradstufe verzweigt und ein Anteil der Antriebsleistung an das Kegelrad zum Antreiben der ersten Fahrzeugachse und ein anderer Anteil der Antriebsleistung an den Ausgang zum Antreiben der zweiten Fahrzeugachse geleitet werden kann.

Die Stirnradstufe kann entsprechend den Verzweigungspunkt bilden, an welchem der Antriebsleistungsfluss in zwei Teilflüsse verzweigt. Durch die Ausbildung dieses Verzweigungspunktes mit lediglich zwei in Eingriff zueinander stehenden Zahnrädern können insbesondere Verluste der Antriebsleistung durch eine Reibung von Bauteilen aneinander minimiert werden. Ferner ermöglicht es die Stirnradstufe auch, den Verzweigungspunkt mit einer bezüglich der Längsrichtung des Fahrzeugs geringen Ausdehnung auszubilden, um die Ausdehnung des Achsantriebs, insbesondere in dieser Richtung, minimieren zu können.

Darüber hinaus kann die genannte Stirnradstufe insbesondere auch den vertikalen Versatz der Abtriebswelle und der Durchtriebswelle zueinander bewirken, so dass die Durchtriebswelle oberhalb oder unterhalb der Abtriebswelle verlaufen kann, um die erste Fahrzeugachse zu überqueren oder zu unterqueren. Ferner kann auch der Antriebswellenabschnitt mit denjenigen der Durchtriebswelle und/oder der Abtriebswelle, zu welchen der Antriebswellenabschnitt nicht koaxial angeordnet ist, über eine Stirnradstufe gekoppelt sein. Auch die Übertragung der Antriebsleistung von dem Antriebswellenabschnitt zu den dazu nicht koaxialen Wellen kann so bei lediglich möglichst geringen Verlusten erfolgen.

Es kann vorgesehen sein, dass das Kegelrad bezüglich der Längsrichtung des Fahrzeugs zwischen dem Eingang und dem Ausgang angeordnet ist. Insbesondere kann das Kegelrad bezüglich der Längsrichtung des Fahrzeugs hinter dem Eingang angeordnet sein, so dass ein an dem Eingang angeschlossener Elektromotor bzw. ein sonstiger Antriebsleistung übertragender Motor bezüglich der Längsrichtung ebenfalls vor dem Kegelrad angeordnet werden kann. Auch dieser Motor kann somit bezüglich der Längsrichtung des Fahrzeuges vor der ersten Fahrzeugachse und entsprechend nicht zwischen der ersten Fahrzeugachse und der zweiten Fahrzeugachse angeordnet werden, so dass der Motor keinen Bauraum zwischen den Fahrzeugachsen beansprucht und dadurch die Anordnung bzw. die Betätigung eines Knickgelenkes nicht beeinträchtigt.

Bei einigen Ausführungsformen kann das abtriebsseitige Ende der Abtriebswelle, an dem das Kegelrad angeordnet ist, in die Längsrichtung des Fahrzeugs weisen. Das Kegelrad kann somit in Richtung des Ausgangs weisen, so dass die Übertragung der Antriebsleistung auf die erste Fahrzeugachse in Längsrichtung erfolgen und das Kegelrad in Längsrichtung vor der ersten Fahrzeugachse angeordnet sein kann. Auch die Übertragung der Rotation auf die erste Fahrzeugachse bzw. auf ein mit dem Kegelrad kämmendes Tellerrad erfolgt bei einer solchen Ausrichtung des Kegelrades nicht zwischen der ersten Fahrzeugachse und der zweiten Fahrzeugachse, so dass der Raum zwischen den Fahrzeugachsen von den Komponenten des Achsantriebs freigehalten werden kann.

Ferner kann durch eine solche Ausrichtung des abtriebsseitigen Endes der Abtriebswelle in Richtung der Längsrichtung des Fahrzeuges erreicht werden, dass sowohl der zu dem Ausgang führende Teilfluss des Antriebsleistungsflusses als auch der zu dem Kegelrad führende Teilfluss des Antriebsleistungsflusses die Antriebsleistung stets entlang der Längsrichtung des Fahrzeugs übertragen. Lediglich der Verzweigungspunkt bzw. der vertikale Versatz zwischen der Durchtriebswelle und der Abtriebswelle kann dabei ein Abweichen von dieser Richtung des Antriebsleistungsflusses bedingen. Insbesondere kann der Teilfluss des Antriebsleistungsflusses von dem Verzweigungspunkt zu dem Kegelrad entlang der Längsrichtung führen. Ferner kann dadurch erreicht werden, dass an dem Eingang empfangene Antriebsleistung an keiner Stelle des Achsantriebs, insbesondere zumindest an keiner Stelle ausschließlich, entgegen der Längsrichtung übertragen wird.

Es kann vorgesehen sein, dass die Längsrichtung des Fahrzeugs in eine Vorwärtsrichtung des Fahrzeugs weist. Alternativ dazu kann es vorgesehen sein, dass die Längsrichtung des Fahrzeugs entgegen der Vorwärtsfahrtrichtung des Fahrzeugs weist.

Im Falle der ersten Alternative kann die erste Fahrzeugachse eine Hinterachse des Fahrzeugs bilden, während die erste Fahrzeugachse im Falle der zweiten Alternative eine Vorderachse bilden kann. Entsprechend kann ein solcher Achsantrieb insbesondere in Abhängigkeit von den jeweiligen Anforderungen an das angetriebene Fahrzeug sowohl an einer Vorderachse als auch an einer Hinterachse des Fahrzeuges angeordnet sein. Unabhängig von der Ausrichtung der Längsrichtung können die Komponenten des Achsantriebs zum anteiligen Verteilen von Antriebsleistung auf die beiden Fahrzeugachsen dabei außerhalb des Bereichs zwischen den beiden Fahrzeugachsen angeordnet werden, um diesen für ein Knickgelenk freizuhalten und große Knickwinkel bei einem geringem Achsabstand sowie die erforderliche Wendigkeit des Fahrzeugs erreichen zu können.

Bei einigen Ausführungsformen kann der Achsantrieb ein Differential zum Verteilen zumindest eines Teils der Antriebsleistung auf zwei Halbwellen der ersten Fahrzeugachse umfassen, wobei das Differential über das Kegelrad antriebswirksam mit der Abtriebswelle gekoppelt ist.

Ein solches Differential kann zwei Differentialausgänge zum Anschluss einer jeweiligen der beiden Halbwellen aufweisen, wobei die Differentialausgänge quer zu der Längsrichtung des Fahrzeugs, insbesondere senkrecht, und einander entgegengesetzt angeordnet sein können. Insbesondere kann ein solches Differential dazu dienen, während des Durchfahrens einer Kurve an den jeweiligen mit den Halbwellen der Fahrzeugachse verbundenen Rädern auftretende Unterschiede der Drehzahlen auszugleichen. Um die Antriebsleistung auf das Differential und dadurch auf die beiden Halbwellen der ersten Fahrzeugachse zu übertragen, kann das an dem abtriebsseitigen Ende der Abtriebswelle angeordnete Kegelrad mit einem Tellerrad in Eingriff stehen, welches an einem Differentialkorb des Differentials vorgesehen ist und insbesondere drehfest mit diesem verbunden sein kann. Dadurch kann eine direkte Übertragung der Antriebsleistung auf das Differential erfolgen und etwaige Verluste, beispielsweise durch Reibung mehrerer Bauteile aneinander, können minimiert werden.

Bei einigen Ausführungsformen kann der Antriebswellenabschnitt über ein Untersetzungsgetriebe mit der Abtriebswelle und/oder der Durchtriebswelle verbunden sein. Insbesondere kann ein solches Untersetzungsgetriebe dabei als Planetengetriebe ausgebildet sein (auch als Umlaufrädergetriebe bezeichnet), welches ein zentral angeordnetes, als Sonnenrad bezeichnetes Zahnrad aufweist, das von mehreren, als Planetenräder bezeichneten Zahnrädern umlaufen wird. Diese Planetenräder können dabei um das Sonnenrad umlaufende Achsen rotieren, so dass auch die Planetenräder das Sonnenrad während ihrer Rotation umkreisen. Die Achsen der Planetenräder können dabei auf einem gemeinsamen Steg angeordnet sein. Außenseitig können die Planetenräder mit einem konzentrisch zu dem Sonnenrad angeordneten Hohlrad kämmen.

Eine Untersetzung bzw. eine Übersetzung der Drehzahl des Antriebswellenabschnitts ins Langsame kann mittels eines solchen Planetengetriebes beispielsweise erfolgen, indem eine Rotation des Antriebswellenabschnitts auf das zentral angeordnete Sonnenrad übertragen wird, während die Durchtriebswelle und/oder die Abtriebswelle drehfest mit dem die Achsen der Planetenräder tragenden Steg verbunden ist. Dabei kann das Hohlrad festgehalten sein und nicht rotieren, sodass die Durchtriebswelle und/oder die Abtriebswelle lediglich mit der im Vergleich zu dem Sonnenrad verlangsamten Drehzahl des Steges der Planetenräder und entsprechend langsamer als der Antriebswellenabschnitt rotiert.

Die Verbindung des Antriebswellenabschnitts mit der Durchtriebswelle und/oder mit der Abtriebswelle über ein Untersetzungsgetriebe kann es insbesondere ermöglichen, schnell drehende Elektromotoren zum Ausgeben der Antriebsleistung an den Eingang zu verwenden und diese schnellen Rotationen zu handhaben. Ferner kann dadurch auch das auf die Achsen des Fahrzeugs übertragene Drehmoment erhöht werden, um insbesondere die erforderlichen Drehmomente zum Antreiben von Fahrzeugen, die zum Bewegen großer Lasten vorgesehen sind, aufbringen zu können.

Das Untersetzungsgetriebe kann mehrstufig und/oder schaltbar ausgebildet sein. Beispielsweise kann das Untersetzungsgetriebe zwei Untersetzungsstufen aufweisen, so dass die von dem Antriebswellenabschnitt auf die Durchtriebswelle und/oder die Abtriebswelle erfolgende Untersetzung bzw. Verringerung der Drehzahl veränderbar und insbesondere wählbar sein kann. Beispielsweise kann ein solches mehrstufiges Untersetzungsgetriebe zwei Planetengetriebe umfassen, wobei mittels einer Kupplung zwischen der bereits erläuterten Untersetzungsstufe von dem Sonnenrad auf den die Achsen der Planetenräder tragenden Steg und einer weiteren Untersetzungsstufe gewählt werden kann. Eine weitere Untersetzungsstufe kann beispielsweise dadurch erreicht werden, dass der Antriebswellenabschnitt wiederum drehfest mit einem Sonnenrad verbunden wird, die Durchtriebswelle und/oder die Abtriebswelle jedoch mit dem zugehörigen Hohlrad gekoppelt wird. Dabei kann der Steg der Planetenräder festgehalten sein, sodass die Durchtriebswelle und/oder die Abtriebswelle mit der im Vergleich zu dem Sonnenrad verlangsamten Drehzahl des Hohlrades rotieren kann. Grundsätzlich ist es auch möglich, bei einem solchen schaltbaren Untersetzungsgetriebe zumindest eine Stufe zur Übersetzung der Drehzahl des Antriebswellenabschnitts ins Schnelle vorzusehen.

Der Antriebswellenabschnitt kann über ein Verteilergetriebe in Form eines Längsdifferentials mit der Abtriebswelle und/oder mit der Durchtriebswelle antriebswirksam gekoppelt sein. Ein solches Längsdifferential (auch als Längsdifferentialgetriebe bezeichnet) kann es ermöglichen, das Drehmoment bzw. die Antriebsleistung gleichmäßig auf die Fahrzeugachsen zu verteilen. Ein derartiges Längsdifferential kann bezüglich der genannten Längsrichtung des Fahrzeugs vor der ersten Fahrzeugachse und insbesondere vor dem Kegelrad angeordnet sein, über welches die Abtriebswelle des Achsantriebs mit der ersten Fahrzeugachse antriebswirksam gekoppelt ist. Somit wird zwischen der ersten Fahrzeugachse und der zweiten Fahrzeugachse kein Bauraum für das Längsdifferential benötigt, und das Fahrzeug kann bei gegebenem Achsabstand einen großen Knickwinkel des Knickgelenks besitzen.

Bei einigen Ausführungsformen kann eine Trennkupplung zwischen dem Antriebswellenabschnitt und der Durchtriebswelle vorgesehen sein. Dadurch kann die Übertragung eines Anteils des Antriebsleistungsflusses zu dem Ausgang und zu der zweiten Fahrzeugachse flexibel unterbrochen werden, um in bestimmten Situationen beispielsweise lediglich die erste Fahrzeugachse anzutreiben. Beispielsweise kann damit auf sich verändernde Gewichtsverhältnisse an den beiden Fahrzeugachsen und sich dadurch verändernde Traktionskoeffizienten reagiert werden, um ein Durchdrehen der an der zweiten Fahrzeugachse angeordneten Räder zu verhindern. Insbesondere kann ein Beladen eines der ersten Fahrzeugachse zugeordneten Fahrzeugteils, beispielsweise mit im Untertagebau gewonnenen Rohstoffen, zu einer Gewichtsverlagerung und einer verringerten Traktion der Räder der zweiten Fahrzeugachse führen, so dass bei voll beladenen Fahrzeugen ein Antreiben über lediglich die erste Fahrzeugachse vorgesehen sein kann.

Der Achsantrieb kann eine Feststellbremse aufweisen, die mit der Durchtriebswelle bremswirksam verbunden ist. Beispielsweise kann eine solche Feststellbremse eine Bremsscheibe aufweisen, die mit der Durchtriebswelle drehfest verbunden ist und einteilig mit dieser ausgebildet sein kann. Durch eine solche Feststellbremse kann ein Rollen des Fahrzeugs verhindert werden, um beispielsweise während eines Beladens oder Parkens des Fahrzeuges eine erhöhte Sicherheit erreichen zu können. Insbesondere kann die Durchtriebswelle dabei antriebswirksam mit der Abtriebswelle gekoppelt sein, so dass eine Rotation der Abtriebswelle durch ein Blockieren der Feststellbremse gleichermaßen verhindert werden kann.

Bei einigen Ausführungsformen können der Antriebswellenabschnitt, die Abtriebswelle und die Durchtriebswelle innerhalb eines gemeinsamen Gehäuses angeordnet sein. Entsprechend können auch die weiteren genannten Komponenten des Achsantriebs, insbesondere ein Differential zum Verteilen der Antriebsleistung auf zwei Halbwellen der ersten Fahrzeugachse, eine die Durchtriebswelle und die Abtriebswelle koppelnde Stirnradstufe, eine zwischen dem Antriebswellenabschnitt und der Durchtriebswelle vorgesehene Trennkupplung, ein den Antriebswellenabschnitt mit der Durchtriebswelle und/oder der Abtriebswelle verbindendes Untersetzungsgetriebe, ein Längsdifferential oder eine Feststellbremse innerhalb des Gehäuses bzw. eines Achsgehäuses angeordnet sein. Der Achsantrieb kann somit eine kompakte Baueinheit bilden, die an der ersten Fahrzeugachse angeordnet ist und insbesondere gesondert von dem Knickgelenk und der zweiten Fahrzeugachse montiert werden kann. Dies kann es ermöglichen, den Achsantrieb als vorgefertigte Baueinheit bereitzustellen und dessen Komponenten in klar definierter Weise anzuordnen, wobei eine solche Baueinheit insbesondere auch unter Berücksichtigung der jeweiligen Anforderungen an das Fahrzeug angefertigt werden kann. Insbesondere kann diese Baueinheit dabei sowohl an einer Vorderachse als auch an einer Hinterachse eines knickgelenkten Fahrzeugs vorgesehen sein.

Die Erfindung betrifft ferner einen Antriebsstrang eines knickgelenkten Fahrzeugs, umfassend eine antreibbare erste Fahrzeugachse und eine antreibbare zweite Fahrzeugachse, die über ein zwischen der ersten Fahrzeugachse und der zweiten Fahrzeugachse angeordnetes Knickgelenk miteinander verbunden sind, sowie einen Achsantrieb zum Antreiben der ersten Fahrzeugachse und der zweiten Fahrzeugachse wie hierin offenbart.

Insbesondere kann der Antriebsstrang lediglich die erste Fahrzeugachse und die zweite Fahrzeugachse aufweisen und keine weiteren Fahrzeugachsen umfassen. Durch den bereits beschriebenen Achsantrieb kann das Antreiben beider Fahrzeugachsen des Antriebsstrangs erreicht werden, ohne dass dazu Komponenten des Achsantriebs zwischen den Fahrzeugachsen angeordnet sind. Der Raum zwischen den Fahrzeugachsen steht somit vollständig für die Anordnung des Knickgelenks zur Verfügung, so dass das Fahrzeug mit einem geringen Achsabstand ausgebildet werden kann und das Knickgelenk dennoch auch bei großen Knickwinkeln nicht durch etwaige in dem Zwischenraum der Achsen angeordnete Komponenten blockiert ist. Dadurch kann das knickgelenkte Fahrzeug möglichst wendig ausgebildet werden, um ein Rangieren auch bei beengten Platzverhältnissen zu ermöglichen.

Das Knickgelenk ist mit dem Ausgang des Achsantriebs verbunden und in Längsrichtung hinter dem Ausgang angeordnet. Somit kann das Knickgelenk in Längsrichtung beabstandet zu sämtlichen Komponenten des Achsantriebs und in einem ausschließlich für das Knickgelenk vorgesehenen Freiraum zwischen den Achsen angeordnet werden.

Ferner umfasst der Antriebsstrang einen Elektromotor, der in Längsrichtung vor dem Eingang des Achsantriebs angeordnet und an den Eingang des Achsantriebs angeschlossen ist. Dabei kann eine Motorwelle des Elektromotors sich insbesondere parallel zu der Längsrichtung des Fahrzeugs erstrecken, wobei die Motorwelle des Elektromotors vorzugsweise koaxial zu dem Antriebswellenabschnitt verlaufen kann. Indem der Elektromotor in Längsrichtung vor dem Eingang des Achsantriebs angeordnet sein kann, kann der Elektromotor außerhalb des Raums zwischen der ersten Fahrzeugachse und der zweiten Fahrzeugachse positioniert werden, so dass ein Betätigen des Knickgelenks durch dessen Anordnung nicht beeinträchtigt wird. Ferner kann eine koaxiale Anordnung der Motorwelle zu dem Antriebswellenabschnitt ermöglichen, die von dem Elektromotor generierte Antriebsleistung direkt auf den von dem Antriebswellenabschnitt an dessen antriebsseitigen Ende gebildeten Eingang zu übertragen, ohne dass Übersetzungsstufen oder Änderungen der Drehrichtung erforderlich sind. Verluste der Antriebsleistung, beispielsweise durch eine Reibung zwischen zum Bilden einer solchen Übersetzungsstufe notwendigen Teile, sowie die Anzahl an Bauteilen können somit minimiert werden.

Die Erfindung wird im Folgenden rein beispielhaft anhand von Ausführungsbeispielen unter Bezugnahme auf die Zeichnungen erläutert.

Es zeigen:

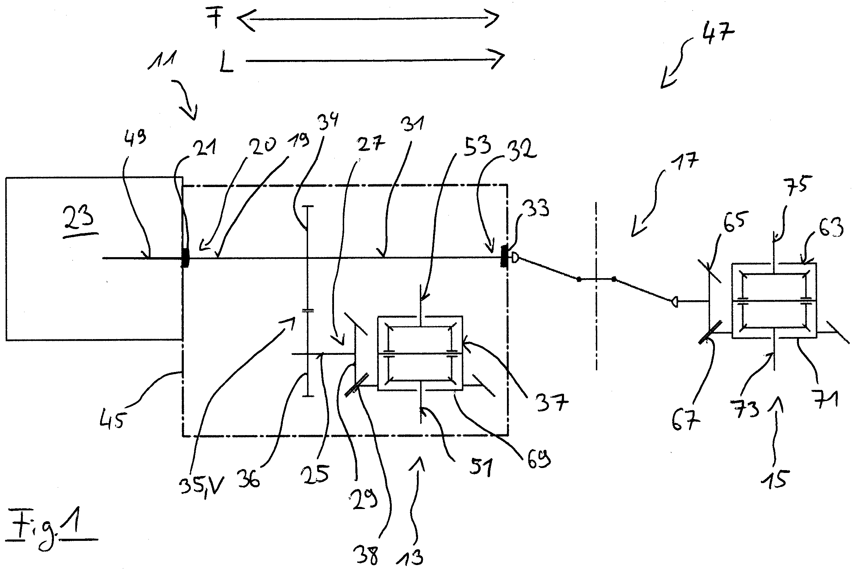

- Fig. 1 bis 6: schematische Darstellungen eines Antriebsstrangs für ein knickgelenktes Fahrzeug mit zwei antreibbaren Fahrzeugachsen und mit jeweiligen Ausführungsformen des hierin offenbarten Achsantriebs.

Fig. 1 zeigt eine schematische Darstellung eines Achsantriebs 47 eines Fahrzeugs mit einer antreibbaren ersten Fahrzeugachse 13 und einer antreibbaren zweiten Fahrzeugachse 15, zwischen welchen ein Knickgelenk 17 angeordnet ist. Dabei sind die Fahrzeugachsen 13 und 15 nicht explizit dargestellt, deren vorgesehenen Positionen jedoch mit den genannten Bezugszeichen 13 und 15 bezeichnet.

Zum Antreiben der ersten Fahrzeugachse 13 und der zweiten Fahrzeugachse 15 weist der Antriebsstrang 47 einen Achsantrieb 11 auf, welcher einen Antriebswellenabschnitt 19 umfasst, der an einem antriebsseitigen Ende 20 einen Eingang 21 bildet, um von einem Elektromotor 23 generierte Antriebsleistung empfangen zu können. Dabei ist eine Motorwelle 49 des Elektromotors 23 koaxial zu dem Eingang 21 und dem Antriebswellenabschnitt 19 angeordnet, so dass die von dem Elektromotor 23 generierte Antriebsleistung bzw. die Rotation der Motorwelle 49 ohne jegliche Übersetzungsstufen oder Elemente zur Veränderung der Rotation auf den Eingang 21 übertragen werden kann.

Der Antriebswellenabschnitt 19 bildet einen Teil einer Durchtriebswelle 31, welche sich von dem Eingang 21 ausgehend entlang einer Längsrichtung L des Fahrzeugs erstreckt und an einem abtriebsseitigen Ende 32 einen Ausgang 33 zur antriebswirksamen Kopplung mit der zweiten Fahrzeugachse 15 über das Knickgelenk 17 bildet. Die Längsrichtung L kann dabei in oder entgegen einer Vorwärtsfahrtrichtung F des Fahrzeugs ausgerichtet sein. Insbesondere kann die erste Fahrzeugachse 13 somit im Falle einer Ausrichtung der Längsrichtung L in Vorwärtsfahrtrichtung F einer Hinterachse des Fahrzeugs entsprechen (rechte Pfeilspitze des Doppelpfeils F), während die erste Fahrzeugachse 13 bei umgekehrter Ausrichtung der Längsrichtung L einer Vorderachse des Fahrzeugs entsprechen kann (linke Pfeilspitze des Doppelpfeils F).

An der Durchtriebswelle 31 ist ein erstes Zahnrad 34 angeordnet, welches in Eingriff mit einem zweiten Zahnrad 36 steht, das mit einer Abtriebswelle 25 drehfest verbunden ist. Die Zahnräder 34 und 36 bilden dabei eine Stirnradstufe 35, über welche ein Anteil der von dem Elektromotor 23 generierten Antriebsleistung auf die Abtriebswelle 25 übertragen werden kann. Diese Abtriebswelle 25 weist an einem abtriebsseitigen Ende 27 ein Kegelrad 29 auf, mittels dessen der empfangene Anteil der Antriebsleistung auf die erste Fahrzeugachse 13 übertragen werden kann. Entsprechend fungiert die Stirnradstufe 35 als ein Verzweigungspunkt V, an welchem ein sich von dem Eingang 21 durch den Achsantrieb 11 erstreckender Antriebsleistungsfluss in einen zu dem Ausgang 33 führenden ersten Teilfluss und in einen zu dem Kegelrad 29 führenden zweiten Teilfluss verzweigt.

Das Kegelrad 29 steht in Eingriff mit einem Tellerrad 38, so dass der empfangenen Anteil der von dem Elektromotor 23 generierten Antriebsleistung auf dieses Tellerrad 38 übertragen wird. Das Tellerrad 38 ist drehfest mit einem Differentialkorb 69 eines Differentials 37 verbunden, an dessen sich senkrecht zu der Längsrichtung L erstreckenden ersten Abtriebswelle 51 und zweiten Abtriebswelle 53 jeweilige Halbwellen der ersten Fahrzeugachse 13 anschließbar sind, um in Rotation versetzt zu werden. Das Differential 37 dient als Achsdifferential und ermöglicht dabei insbesondere einen Ausgleich unterschiedlicher Drehzahlen der an den jeweiligen Enden der ersten Fahrzeugachse 13 angeschlossenen Räder beim Durchfahren einer Kurve.

Durch die Stirnradstufe 35 ist die Abtriebswelle 25 permanent antriebswirksam mit dem Antriebswellenabschnitt 19 und entsprechend dem Eingang 21 gekoppelt. Somit kann zu jeder Zeit der vorgesehene Anteil empfangener Antriebsleistung auf die Abtriebswelle 25 und das Kegelrad 29 übertragen werden, um einen Antrieb der ersten Fahrzeugachse 13 zu ermöglichen.

Sowohl die Durchtriebswelle 31 und deren Antriebswellenabschnitt 19 als auch die Abtriebswelle 25 erstrecken sich entlang der Längsrichtung L, so dass sich auch der Achsantrieb 11 vornehmlich in diese Richtung ausdehnt. Dabei bewirkt die Stirnradstufe 35 einen vertikalen Versatz zwischen der Durchtriebswelle 31 und der Abtriebswelle 25, so dass die Durchtriebswelle 31 oberhalb oder unterhalb der Abtriebswelle 25 angeordnet sein kann und die erste Fahrzeugachse 13 entsprechend überqueren oder unterqueren kann. Ferner sind sowohl die Stirnradstufe 35 mit den Zahnrädern 34 und 36 als auch das Kegelrad 29 bezüglich der Längsrichtung L zwischen dem Eingang 21 und dem in Bezug auf die Längsrichtung L dahinterliegenden Ausgang 33 angeordnet, so dass die Erstreckung des Achsantriebs 11 in Längsrichtung L den Abstand zwischen dem Eingang 21 und dem Ausgang 33 an keiner Stelle übersteigt.

Das abtriebsseitige Ende 27 der Abtriebswelle 25 mit dem Kegelrad 29 weist in Richtung der Längsrichtung L, so dass die Stirnradstufe 35, die Abtriebswelle 25 und das Kegelrad 29 entlang der Längsrichtung L betrachtet vor der ersten Fahrzeugachse 13 angeordnet sind. Somit können insbesondere sämtliche Komponenten des Achsantriebs 11 in Bezug auf die Längsrichtung L vor der ersten Fahrzeugachse 13 angeordnet sein. Dadurch beansprucht der Achsantrieb 11 keinerlei Bauraum zwischen der ersten Fahrzeugachse 13 und der zweiten Fahrzeugachse 15, so dass dieser Raum vollständig für die Anordnung des Knickgelenks 17 zur Verfügung steht. Dies ermöglicht es, das Knickgelenk 17 zwischen den Fahrzeugachsen 13 und 15 anzuordnen und beide Fahrzeugachsen 13 und 15 anzutreiben, ohne dass die Anordnung der dazu notwendigen Komponenten des Achsantriebs 11 einen großen Abstand zwischen den Fahrzeugachsen 13 und 15 bedingt oder das Knickgelenk 17 bei großen Knickwinkeln durch den Achsantrieb 11 blockiert wird. Auch der Elektromotor 23 kann durch die Anordnung in Längsrichtung L vor dem Eingang 21 außerhalb der Fahrzeugachsen 13 und 15 positioniert werden, so dass auch der Elektromotor 23 die Betätigung des Knickgelenks 17 nicht beeinträchtigt. Durch einen solchen Achsantrieb 11 kann ein knickgelenktes Fahrzeug mit geringem Abstand zwischen den zwei angetriebenen Fahrzeugachsen 13 und 15 und dadurch möglichst kurz ausgebildet werden, um eine hohe Wendigkeit des Fahrzeugs und ein Rangieren bei beengten Platzverhältnissen zu ermöglichen.

Sämtliche Komponenten des Achsantriebs 11 sind in einem gemeinsamen Gehäuse 45 angeordnet, sodass der Achsantrieb 11 eine kompakte und vorgefertigte Baueinheit bilden kann. Dadurch kann eine möglichst klar definierte und stabile Anordnung der Komponenten, beispielsweise der Durchtriebswelle 31 und der Abtriebswelle 25, erreicht werden, wobei die Komponenten durch das Gehäuse 45 ferner vor äußeren Einflüssen geschützt werden können. Der Achsantrieb 11 kann dabei flexibel in Abhängigkeit von den jeweiligen Anforderungen des anzutreibenden Fahrzeuges ausgebildet werden, sodass die erste Fahrzeugachse 13 beispielsweise eine Vorderachse oder eine Hinterachse bilden kann und die Durchtriebswelle 31 sowohl die erste Fahrzeugachse 13 überquerend als auch die erste Fahrzeugachse 13 unterquerend vorgesehen sein kann.

Der zu dem Ausgang 33 geleitete Anteil der von dem Elektromotor 23 generierten Antriebsleistung wird über das Knickgelenk 17 auf ein weiteres Kegelrad 65 geleitet, welches in Eingriff mit einem mit einem Differentialkorb 71 eines Differentials 63 verbundenen Tellerrad 67 kämmt. Die Abtriebswellen 73 und 75 des Differentials 63 sind dabei mit jeweiligen Halbwellen der zweiten Fahrzeugachse 15 verbindbar, so dass auch die zweite Fahrzeugachse 15 durch den vorgesehenen Anteil der von dem Elektromotor 23 generierten Antriebsleistung angetrieben werden kann. Wiederum ermöglicht das Differential 63 einen Ausgleich unterschiedlicher Drehzahlen der an den jeweiligen Enden der zweiten Fahrzeugachse 15 montierten Räder, insbesondere während eines Durchfahrens einer Kurve.

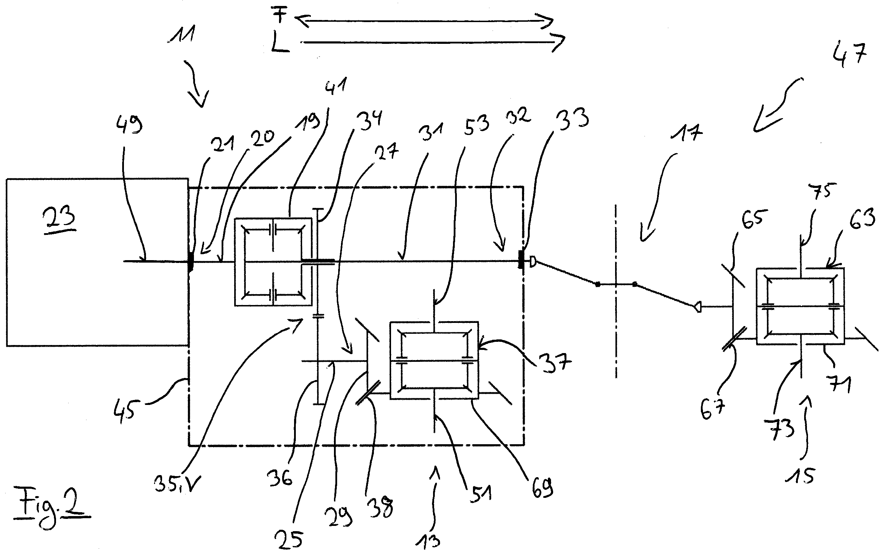

Fig. 2 zeigt eine weitere Ausführungsform des Antriebsstrangs 47 bzw. des Achsantriebs 11. Dabei ist der Antriebswellenabschnitt 19 nicht einteilig mit der Durchtriebswelle 31 ausgebildet, sondern als gesonderte Welle über ein Längsdifferential 41 mit der Durchtriebswelle 31 verbunden. Auch das erste Zahnrad 34, welches gemeinsam mit dem an der Abtriebswelle 25 vorgesehenen zweiten Zahnrad 36 eine Stirnradstufe 35 bzw. einen Verzweigungspunkt V des Antriebsleistungsflusses durch den Antriebsstrang 11 bildet, ist mit dem Längsdifferential 41 gekoppelt. Die Anordnung eines solchen Längsdifferentials 41 kann es ermöglichen, Drehmomente zwischen der ersten Fahrzeugachse 13 und der zweiten Fahrzeugachse 16 zu verteilen bzw. auszugleichen. Das Längsdifferential 41 ist entlang der Längsrichtung L betrachtet vor der Stirnradstufe 35 und somit auch vor der ersten Fahrzeugachse 13 angeordnet.

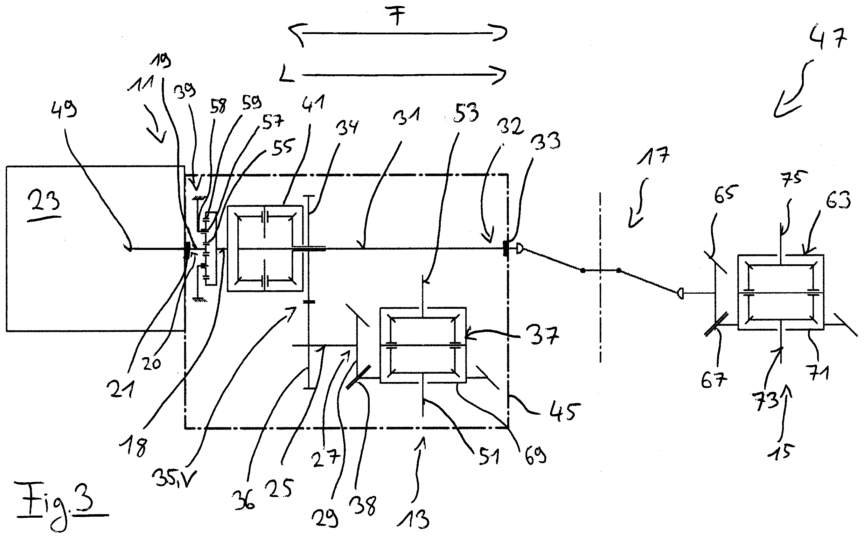

Gemäß der in Fig. 3 gezeigten Ausführungsform kann die Durchtriebswelle 31 ferner über ein Untersetzungsgetriebe 39 mit dem Antriebswellenabschnitt 19 verbunden sein. Dieses Untersetzungsgetriebe 39 kann, wie hier gezeigt, als Planetengetriebe ausgebildet sein. Dieses Planetengetriebe umfasst ein zentral bzw. koaxial zu dem Eingang 21 und der Motorwelle 49 des Elektromotors 23 angeordnetes Sonnenrad 55 und ein ebenfalls koaxial dazu angeordnetes außenseitiges Hohlrad 59. Ferner weist das Planetengetriebe Planetenräder 57 auf, die um auf einem Steg 58 angeordnete und das Sonnenrad 55 umlaufende Achsen rotieren. Um die gewünschte Untersetzung bzw. eine Verlangsamung der Rotation von dem Antriebswellenabschnitt 19 auf eine Verbindungswelle 18, die das Untersetzungsgetriebe 39 mit einem Längsdifferential 41 und der Durchtriebswelle 31 verbindet, zu erreichen, ist der Antriebswellenabschnitt 19 drehfest mit dem Sonnenrad 55 gekoppelt. Die Verbindungswelle 18 ist hingegen drehfest mit dem Hohlrad 59 verbunden, während der Steg der Planetenräder 57 festgehalten ist, sodass die Verbindungswelle 18 leidglich mit der im Vergleich zu dem Sonnenrad 55 und dem Antriebswellenabschnitt 19 verlangsamten Drehzahl des Hohlrades 59 rotiert.

Grundsätzlich kann ein solches Untersetzungsgetriebe 39 dazu dienen, die Verwendung schnelldrehender Elektromotoren 23 zu ermöglichen und die dabei über die Motorwelle 49 auf den Eingang 21 übertragenen Rotationsgeschwindigkeiten handhaben zu können. Ferner kann es das Untersetzungsgetriebe 39 ermöglichen, die insbesondere zu einem Bewegen schwer beladener Bau- oder Nutzfahrzeuge erforderlichen Drehmomente aufbringen zu können. Entsprechend kann ein solches Untersetzungsgetriebe 39 auch ohne das Längsdifferential 41 in dem Achsantrieb 11 vorgesehen sein.

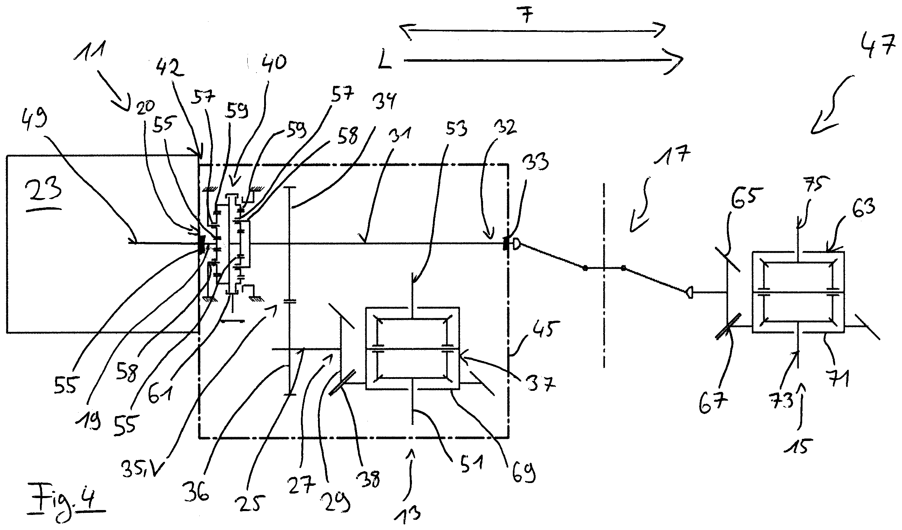

Ferner kann ein solches Untersetzungsgetriebe, mit oder, wie in Fig. 4 gezeigt, ohne Längsdifferential 41, auch als mehrstufiges bzw. schaltbares Untersetzungsgetriebe 42 vorgesehen sein. Dieses schaltbare Untersetzungsgetriebe 42 weist dazu zwei Planetengetriebe mit jeweiligen Sonnenrädern 55, Planetenrädern 57, Stegen 58 und Hohlrädern 59 auf, die jeweilige Untersetzungsstufen mit verschiedenen Drehzahlverhältnissen zwischen dem Antriebswellenabschnitt 19 und der Durchtriebswelle 31 bilden. Um zwischen diesen Untersetzungsstufen wählen zu können, ist eine Kupplung 40 vorgesehen, mittels derer der Antriebswellenabschnitt 19 und die Durchtriebswelle 31 wahlweise mit dem ersten oder mit dem zweiten Planetengetriebe gekoppelt werden können.

Als erste Möglichkeit zur Untersetzung weist das schaltbare Untersetzungsgetriebe 42 dabei ein Planetengetriebe auf, dessen Sonnenrad 55 drehfest mit dem Antriebswellenabschnitt 19 verbunden ist. Die Übertragung der Rotation auf die Durchtriebswelle 31 erfolgt dabei wiederum über das mit der Durchtriebswelle 31 gekoppelte Hohlrad 59, während der Steg 58 der Planetenräder 57 festgehalten ist. Durch ein Koppeln des Antriebswellenabschnitts 19 und der Durchtriebswelle 31 mit dem zweiten Planetengetriebe mittels der Kupplung 40 kann eine weitere Untersetzungsstufe eingestellt werden. Bei dieser Untersetzungsstufe ist der Antriebswellenabschnitt 19 wiederum mit dem Sonnenrad 55 drehfest verbunden, wohingegen die Übertragung der Rotation auf die Durchtriebswelle 31 über den Steg 58 der Planetenräder 57 erfolgt und das Hohlrad 59 festgehalten ist.

Ein solches zweistufiges und schaltbares Untersetzungsgetriebe 42 kann die Flexibilität in der Antriebsübertragung erhöhen, indem die auf die Durchtriebswelle 31 und entsprechend die Abtriebswelle 25 bzw. die beiden Fahrzeugachsen 13 und 15 übertragenen Rotationsgeschwindigkeiten und Drehmomente gewählt und angepasst werden können. Insbesondere kann dabei eine der Untersetzungsstufen dazu vorgesehen sein, ein insbesondere voll bzw. schwer beladenes Fahrzeug nach dem Beladen in Fahrt zu versetzen, während die zweite Untersetzungsstufe während der Fahrt eingelegt werden kann. Grundsätzlich ist es auch möglich, an einem den Antriebswellenabschnitt 19 mit der Durchtriebswelle 31 und/oder der Abtriebswelle 25 verbindenden Getriebe eine Übersetzungsstufe mit einer Übersetzung der Rotation ins Schnelle vorzusehen.

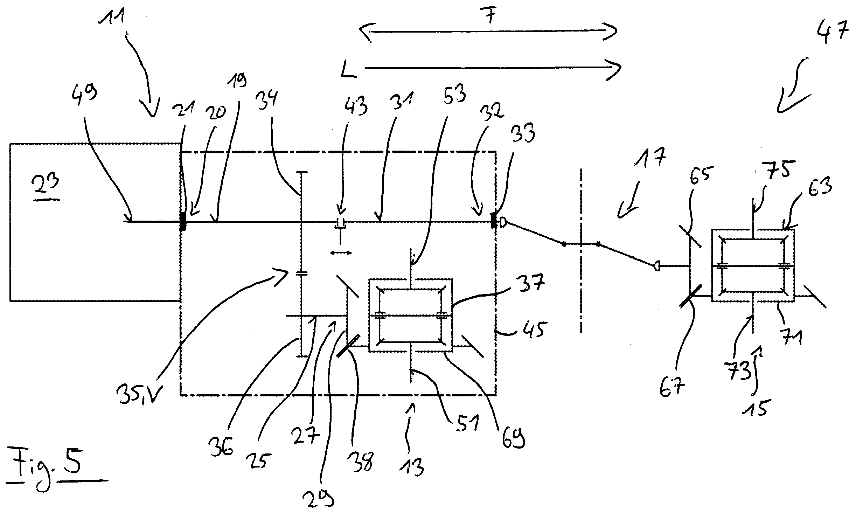

Fig. 5 zeigt eine weitere Ausführungsform des Achsantriebs 11, wobei zwischen dem Antriebswellenabschnitt 19 und der Durchtriebswelle 31 eine Trennkupplung 43 vorgesehen ist. Durch diese Trennkupplung 43 kann die Übertragung einer Antriebsleistung auf den Ausgang 33 und entsprechend auf die zweite Fahrzeugachse 15 wahlweise unterbrochen bzw. eingesetzt werden. In bestimmten Situationen kann ein Antrieb des Fahrzeugs somit auch ausschließlich über die erste Fahrzeugachse 13 erfolgen, welche permanent antriebswirksam mit dem Antriebswellenabschnitt 19 und dem Eingang 21 gekoppelt ist. Beispielsweise kann dies vorgesehen sein, wenn ein der ersten Fahrzeugachse 13 zugeordnetes Fahrzeugteil beladen wurde, so dass sich die Traktion der an der zweiten Fahrzeugachse 15 angeordneten Räder aufgrund der veränderten Gewichtsverteilung verringert. Um ein Durchdrehen dieser Räder zu verhindern, kann der Antrieb des Fahrzeugs in einer solchen Situation beispielsweise lediglich über die erste Fahrzeugachse 13 erfolgen.

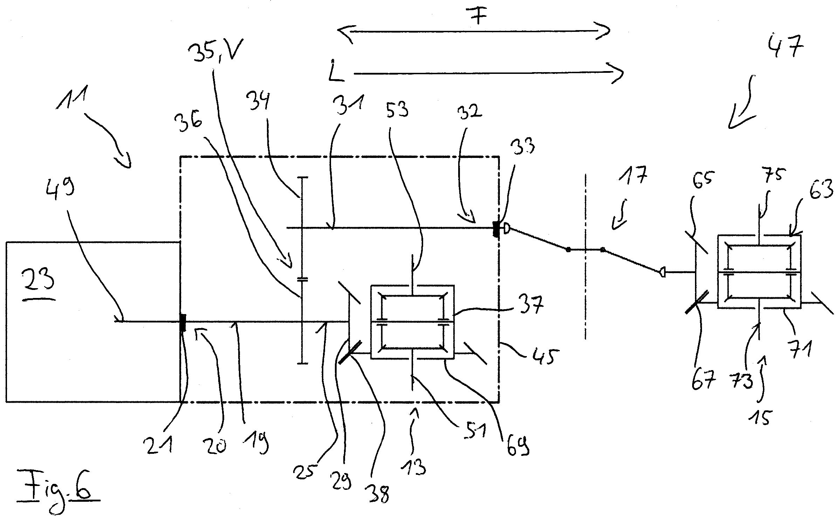

Fig. 6 zeigt eine weitere Ausführungsform des Antriebsstrangs 47 und des Achsantriebs 11, wobei der Antriebswellenabschnitt 19 einteilig mit der Abtriebswelle 25 ausgebildet ist, so dass die Abtriebswelle 25 koaxial zu dem Eingang 21 und der Motorwelle 49 des Elektromotors 23 angeordnet ist. Hierdurch erfolgt ein direkter Antrieb der ersten Fahrzeugachse 13 über die mit dem Eingang 21 verbundene Abtriebswelle 25 und das Kegelrad 29, welches in Eingriff mit dem Tellerrad 38 steht.

Wiederum ist die Abtriebswelle 25 über das an der Abtriebswelle 25 angeordnete zweite Zahnrad 36 und das an der Durchtriebswelle 31 angeordnete erste Zahnrad 34, die gemeinsam die Stirnsatzstufe 35 bilden, mit der Durchtriebswelle 31 antriebswirksam verbunden. Auch hierbei bedingt die Stirnradstufe 35 einen vertikalen Versatz zwischen der Abtriebswelle 25 und der Durchtriebswelle 31, so dass die Durchtriebswelle 31 die erste Fahrzeugachse 13 überqueren oder unterqueren kann.

Auch bei dieser Ausführungsform, bei welcher die Abtriebswelle 25 koaxial zu dem Eingang 21 angeordnet ist, können sämtliche Komponenten des Achsantriebs 11 zum Leiten des dazu vorgesehenen Anteils der an dem Eingang 21 empfangenen Antriebsleistung zu der ersten Fahrzeugachse 13 bzw. dem Differential 37 bezüglich der Längsrichtung L vor der ersten Fahrzeugachse 13 angeordnet werden. Der Raum zwischen den beiden Fahrzeugachsen 13 und 15 wird somit nicht von den Komponenten des Achsantriebs 11 beansprucht und steht für die Anordnung des Knickgelenks 17 zur Verfügung. Entsprechend können der Abstand zwischen den Fahrzeugachsen 13 und 15 wunschgemäß möglichst gering gewählt und dabei dennoch große Knickwinkel erreicht werden, um eine hohe Wendigkeit des Fahrzeugs und insbesondere ein Rangieren bei beengten Platzverhältnissen zu ermöglichen.

Sämtliche in den Figuren 1 bis 5 gezeigten Ausführungsformen mit zusätzlichen Komponenten, wie insbesondere mit einem ein- oder mehrstufigen Untersetzungsgetriebe 39, einem Längsdifferential 41, einer Trennkupplung 43 oder beliebigen Kombinationen dieser, können grundsätzlich auch bei einer Ausführungsform mit einer zu dem Eingang koaxialen Abtriebswelle 25 wie in der in Fig. 6 veranschaulichten vorgesehen sein. Darüber hinaus kann eine mit der Durchtriebswelle 31 drehfest bzw. bremswirksam verbundene und in den Figuren nicht dargestellte Feststellbremse vorgesehen sein, um ein Rollen des Fahrzeuges, insbesondere während eines Beladens oder Parkens, zuverlässig verhindern zu können.

### Bezugszeichenliste

- 11: Achsantrieb
- 13: erste Fahrzeugachse
- 15: zweite Fahrzeugachse
- 17: Knickgelenk
- 18: Verbindungsabschnitt
- 19: Antriebswellenabschnitt
- 20: antriebsseitiges Ende des Antriebswellenabschnitts
- 21: Eingang
- 23: Elektromotor
- 25: Abtriebswelle
- 27: abtriebsseitiges Ende der Abtriebswelle
- 29: Kegelrad
- 31: Durchtriebswelle
- 32: abtriebsseitiges Ende der Durchtriebswelle
- 33: Ausgang
- 34: erstes Zahnrad
- 35: Stirnradstufe
- 36: zweites Zahnrad
- 37: Differential
- 38: Tellerrad
- 39: Untersetzungsgetriebe
- 40: Kupplung
- 41: Längsdifferential
- 42: schaltbares Untersetzungsgetriebe
- 43: Trennkupplung
- 45: Gehäuse
- 47: Antriebsstrang
- 49: Motorwelle
- 51: erste Abtriebswelle des Differentials der ersten Fahrzeugachse
- 53: zweite Abtriebswelle des Differentials der ersten Fahrzeugachse
- 55: Sonnenrad
- 57: Planetenrad
- 58: Steg
- 59: Hohlrad
- 61: Kupplung
- 63: Differential
- 65: Kegelrad
- 67: Tellerrad
- 69: Differentialkorb
- 71: Differentialkorb
- 73: erste Abtriebswelle des Differentials der zweiten Fahrzeugachse
- 75: zweite Abtriebswelle des Differentials der zweiten Fahrzeugachse

- F: Vorwärtsfahrtrichtung
- L: Längsrichtung des Fahrzeuges
- V: Verzweigungspunkt

## Patentansprüche

1. Achsantrieb (11) für ein knickgelenktes Fahrzeug, das zumindest eine antreibbare erste Fahrzeugachse (13) und eine antreibbare zweite Fahrzeugachse (15) sowie ein dazwischen vorgesehenes Knickgelenk (17) aufweist, umfassend
- einen Antriebswellenabschnitt (19) mit einem antriebsseitigen Ende (20), das einen Eingang (21) zum Empfangen einer Antriebsleistung von einem Elektromotor (23) bildet,
- eine Abtriebswelle (25) mit einem abtriebsseitigen Ende (27), an dem ein Kegelrad (29) zur antriebswirksamen Kopplung mit der ersten Fahrzeugachse (13) angeordnet ist, und
- eine Durchtriebswelle (31) mit einem abtriebsseitigen Ende (32), das einen Ausgang (33) zur antriebswirksamen Kopplung mit der zweiten Fahrzeugachse (15) bildet;
wobei der Eingang (21) und der Ausgang (33) des Achsantriebs (11) bezüglich einer Längsrichtung (L) des Fahrzeugs entgegengesetzt zueinander angeordnet sind und der Ausgang (33) bezüglich der Längsrichtung (L) hinter dem Eingang (21) angeordnet ist,
wobei der Antriebswellenabschnitt (19), die Abtriebswelle (25) und die Durchtriebswelle (31) parallel zu der Längsrichtung (L) ausgerichtet sind, wobei der Antriebswellenabschnitt (19) sowohl mit der Abtriebswelle (25) als auch mit der Durchtriebswelle (31) antriebswirksam gekoppelt oder koppelbar ist, sodass ein Antriebsleistungsfluss, der sich von dem Eingang (21) aus durch den Achsantrieb (11) erstreckt, an einem Verzweigungspunkt (V) in einen zum Ausgang (33) führenden ersten Teilfluss und in einen zum Kegelrad (29) führenden zweiten Teilfluss verzweigt, um empfangene Antriebsleistung zumindest anteilig zu der ersten Fahrzeugachse (13) und/oder zu der zweiten Fahrzeugachse (15) zu übertragen,
wobei der Verzweigungspunkt (V) des Antriebsleistungsflusses bezüglich der Längsrichtung (L) des Fahrzeugs vor dem Kegelrad (29) vorgesehen ist,
wobei die Durchtriebswelle (31) vertikal versetzt zu der Abtriebswelle (25) angeordnet ist, um die erste Fahrzeugachse (13) zu überqueren oder zu unterqueren, und
wobei der Antriebswellenabschnitt (19), die Abtriebswelle (25) und die Durchtriebswelle (31) innerhalb eines gemeinsamen Gehäuses (45) angeordnet sind,
**dadurch gekennzeichnet, dass**
der Elektromotor (23) direkt an dem Gehäuse (45) angeordnet ist.

2. Achsantrieb (11) nach Anspruch 1,
wobei der Antriebswellenabschnitt (19) entweder zu der Abtriebswelle (25) oder zu der Durchtriebswelle (31) koaxial angeordnet ist.

3. Achsantrieb (11) nach Anspruch 1 oder 2,
wobei der Antriebswellenabschnitt (19) mit der Abtriebswelle (25) permanent antriebswirksam gekoppelt ist.

4. Achsantrieb (11) nach einem der vorhergehenden Ansprüche,
wobei die Abtriebswelle (25) und die Durchtriebswelle (31) über eine Stirnradstufe (35) antriebswirksam miteinander gekoppelt sind.

5. Achsantrieb (11) nach einem der vorhergehenden Ansprüche,
wobei das Kegelrad (29) bezüglich der Längsrichtung (L) des Fahrzeugs zwischen dem Eingang (21) und dem Ausgang (33) angeordnet ist.

6. Achsantrieb (11) nach einem der vorhergehenden Ansprüche,
wobei das abtriebsseitige Ende (27) der Abtriebswelle (25), an dem das Kegelrad (29) angeordnet ist, in die Längsrichtung (L) des Fahrzeugs weist.

7. Achsantrieb (11) nach einem der vorhergehenden Ansprüche,
wobei die Längsrichtung (L) des Fahrzeugs in eine Vorwärtsfahrtrichtung (F) des Fahrzeuges weist, oder wobei die Längsrichtung (L) entgegen der Vorwärtsfahrtrichtung (F) des Fahrzeuges weist.

8. Achsantrieb (11) nach einem der vorhergehenden Ansprüche,
wobei der Achsantrieb (11) ein Differential (37) zum Verteilen zumindest eines Teils der Antriebsleistung auf zwei Halbwellen (51, 53) der ersten Fahrzeugachse (13) umfasst, wobei das Differential (37) über das Kegelrad (29) antriebswirksam mit der Abtriebswelle (25) gekoppelt ist;
wobei das Differential (37) bezüglich der Längsrichtung (L) des Fahrzeugs vorzugsweise zwischen dem Eingang (21) und dem Ausgang (33) angeordnet ist.

9. Achsantrieb (11) nach einem der vorhergehenden Ansprüche,
wobei der Antriebswellenabschnitt (19) über ein Untersetzungsgetriebe (39) mit der Abtriebswelle (25) und/oder der Durchtriebswelle (31) verbunden ist; und/oder
wobei der Antriebswellenabschnitt (19) über ein Längsdifferential (41) mit der Abtriebswelle (25) und/oder mit der Durchtriebswelle (31) antriebswirksam gekoppelt ist.

10. Achsantrieb (11) nach einem der vorhergehenden Ansprüche, wobei eine Trennkupplung (43) zwischen dem Antriebswellenabschnitt (19) und der Durchtriebswelle (31) vorgesehen ist.

11. Achsantrieb (11) nach einem der vorhergehenden Ansprüche,
wobei der Achsantrieb (11) eine Feststellbremse aufweist, die mit der Durchtriebswelle (31) bremswirksam verbunden ist.

12. Antriebsstrang (47) eines knickgelenkten Fahrzeuges, umfassend eine antreibbare erste Fahrzeugachse (13) und eine antreibbare zweite Fahrzeugachse (15), die über ein zwischen der ersten Fahrzeugachse (13) und der zweiten Fahrzeugachse (15) angeordnetes Knickgelenk (17) miteinander verbunden sind, sowie einen Achsantrieb (11) zum Antreiben der ersten Fahrzeugachse (13) und der zweiten Fahrzeugachse (15), wobei der Achsantrieb (11)
- einen Antriebswellenabschnitt (19) mit einem antriebsseitigen Ende (20), das einen Eingang (21) zum Empfangen einer Antriebsleistung von einem Elektromotor (23) bildet,
- eine Abtriebswelle (25) mit einem abtriebsseitigen Ende (27), an dem ein Kegelrad (29) zur antriebswirksamen Kopplung mit der ersten Fahrzeugachse (13) angeordnet ist, und
- eine Durchtriebswelle (31) mit einem abtriebsseitigen Ende (32) umfasst, das einen Ausgang (33) zur antriebswirksamen Kopplung mit der zweiten Fahrzeugachse (15) bildet;
wobei der Eingang (21) und der Ausgang (33) des Achsantriebs (11) bezüglich einer Längsrichtung (L) des Fahrzeugs entgegengesetzt zueinander angeordnet sind und der Ausgang (33) bezüglich der Längsrichtung (L) hinter dem Eingang (21) angeordnet ist,
wobei der Antriebswellenabschnitt (19), die Abtriebswelle (25) und die Durchtriebswelle (31) parallel zu der Längsrichtung (L) ausgerichtet sind, wobei der Antriebswellenabschnitt (19) sowohl mit der Abtriebswelle (25) als auch mit der Durchtriebswelle (31) antriebswirksam gekoppelt oder koppelbar ist, sodass ein Antriebsleistungsfluss, der sich von dem Eingang (21) aus durch den Achsantrieb (11) erstreckt, an einem Verzweigungspunkt (V) in einen zum Ausgang (33) führenden ersten Teilfluss und in einen zum Kegelrad (29) führenden zweiten Teilfluss verzweigt, um empfangene Antriebsleistung zumindest anteilig zu der ersten Fahrzeugachse (13) und/oder zu der zweiten Fahrzeugachse (15) zu übertragen,
wobei der Verzweigungspunkt (V) des Antriebsleistungsflusses bezüglich der Längsrichtung (L) des Fahrzeugs vor dem Kegelrad (29) vorgesehen ist,
wobei die Durchtriebswelle (31) vertikal versetzt zu der Abtriebswelle (25) angeordnet ist, um die erste Fahrzeugachse (13) zu überqueren oder zu unterqueren,
wobei das Knickgelenk (17) mit dem Ausgang (33) des Achsantriebs (11) verbunden ist und in Längsrichtung (L) hinter dem Ausgang (33) angeordnet ist, und
wobei der Antriebsstrang (47) einen Elektromotor (23) umfasst, der in Längsrichtung (L) vor dem Eingang (21) des Achsantriebs (11) angeordnet und an den Eingang (21) des Achsantriebs (11) angeschlossen ist.

13. Antriebsstrang (47) nach Anspruch 12,
wobei eine Motorwelle (49) des Elektromotors (23) sich parallel zu der Längsrichtung (L) des Fahrzeuges erstreckt, wobei die Motorwelle (49) des Elektromotors (23) vorzugsweise koaxial zu dem Antriebswellenabschnitt (19) verläuft.

## Claims

1. An axle drive (11) for an articulated vehicle which has at least a drivable first vehicle axle (13) and a drivable second vehicle axle (15) as well as an articulated joint (17) provided therebetween,
said axle drive (11) comprising
- a drive shaft section (19) having a drive-side end (20) which forms an input (21) for receiving a drive power from an electric motor (23),
- a driven shaft (25) having a driven-side end (27) at which a bevel gear (29) is arranged for a drive-effective coupling to the first vehicle axle (13), and
- a through drive shaft (31) having a driven-side end (32) which forms an output (33) for a drive-effective coupling to the second vehicle axle (15);
wherein the input (21) and the output (33) of the axle drive (11) are arranged opposite one another with respect to a longitudinal direction (L) of the vehicle and the output (33) is arranged behind the input (21) with respect to the longitudinal direction (L),
wherein the drive shaft section (19), the driven shaft (25) and the through drive shaft (31) are aligned in parallel with the longitudinal direction (L), wherein the drive shaft section (19) is drive-effectively coupled or couplable to both the driven shaft (25) and the through drive shaft (31) so that a drive power flow extending from the input (21) through the axle drive (11) branches at a branch point (V) into a first partial flow leading to the output (33) and into a second partial flow leading to the bevel gear (29) in order to transmit received drive power at least proportionally to the first vehicle axle (13) and/or the second vehicle axle (15),
wherein the branch point (V) of the drive power flow is provided in front of the bevel gear (29) with respect to the longitudinal direction (L) of the vehicle,
wherein the through drive shaft (31) is arranged vertically offset from the driven shaft (25) to cross over or under the first vehicle axle (13), and
wherein the drive shaft section (19), the driven shaft (25) and the through drive shaft (31) are arranged within a common housing (45), **characterized in that**
the electric motor (23) is arranged directly at the housing (45).

2. An axle drive (11) according to claim 1,
wherein the drive shaft section (19) is arranged coaxially either to the driven shaft (25) or to the through drive shaft (31).

3. An axle drive (11) according to claim 1 or 2,
wherein the drive shaft section (19) is permanently drive-effectively coupled to the driven shaft (25).

4. An axle drive (11) according to any one of the preceding claims,
wherein the driven shaft (25) and the through drive shaft (31) are drive-effectively coupled to one another via a spur gear set (35).

5. An axle drive (11) according to any one of the preceding claims,
wherein the bevel gear (29) is arranged between the input (19) and the output (33) with respect to the longitudinal direction (L) of the vehicle.

6. An axle drive (11) according to any one of the preceding claims,
wherein the driven-side end (27) of the driven shaft (25) at which the bevel gear (29) is arranged faces in the longitudinal direction (L) of the vehicle.

7. An axle drive (11) according to any one of the preceding claims,
wherein the longitudinal direction (L) of the vehicle faces in a forward travel direction (F) of the vehicle, or wherein the longitudinal direction (L) faces in the opposite direction to the forward travel direction (F) of the vehicle.

8. An axle drive (11) according to any one of the preceding claims,
wherein the axle drive (11) comprises a differential (37) for distributing at least a portion of the drive power to two half-shafts (51, 53) of the first vehicle axle (13), wherein the differential (37) is drive-effectively coupled to the driven shaft (25) via the bevel gear (29);
wherein the differential (37) is preferably arranged between the input (21) and the output (33) with respect to the longitudinal direction (L) of the vehicle.

9. An axle drive (11) according to any one of the preceding claims,
wherein the drive shaft section (19) is connected to the driven shaft (25) and/or the through drive shaft (31) via a reduction gear unit (39); and/or
wherein the drive shaft section (19) is drive-effectively coupled to the driven shaft (25) and/or the through drive shaft (31) via a longitudinal differential (41).

10. An axle drive (11) according to any one of the preceding claims,
wherein a cut-out clutch (43) is provided between the drive shaft section (19) and the through drive shaft (31).

11. An axle drive (11) according to any one of the preceding claims,
wherein the axle drive (11) has a parking brake which is brake-effectively connected to the through drive shaft (31).

12. A drive train (47) of an articulated vehicle, comprising a drivable first vehicle axle (13) and a drivable second vehicle axle (15), which are connected to one another via an articulated joint (17) arranged between the first vehicle axle (13) and the second vehicle axle (15), and an axle drive (11) for driving the first vehicle axle (13) and the second vehicle axle (15), wherein the axle drive (11) comprises
- a drive shaft section (19) having a drive-side end (20) which forms an input (21) for receiving a drive power from an electric motor (23),
- a driven shaft (25) having a driven-side end (27) at which a bevel gear (29) is arranged for a drive-effective coupling to the first vehicle axle (13), and
- a through drive shaft (31) having a driven-side end (32) which forms an output (33) for a drive-effective coupling to the second vehicle axle (15);
wherein the input (21) and the output (33) of the axle drive (11) are arranged opposite one another with respect to a longitudinal direction (L) of the vehicle and the output (33) is arranged behind the input (21) with respect to the longitudinal direction (L),
wherein the drive shaft section (19), the driven shaft (25) and the through drive shaft (31) are aligned in parallel with the longitudinal direction (L), wherein the drive shaft section (19) is drive-effectively coupled or couplable to both the driven shaft (25) and the through drive shaft (31) so that a drive power flow extending from the input (21) through the axle drive (11) branches at a branch point (V) into a first partial flow leading to the output (33) and into a second partial flow leading to the bevel gear (29) in order to transmit received drive power at least proportionally to the first vehicle axle (13) and/or the second vehicle axle (15),
wherein the branch point (V) of the drive power flow is provided in front of the bevel gear (29) with respect to the longitudinal direction (L) of the vehicle,
wherein the through drive shaft (31) is arranged vertically offset from the driven shaft (25) to cross over or under the first vehicle axle (13),
wherein the articulated joint (17) is connected to the output (33) of the axle drive (11) and is arranged behind the output (33) in the longitudinal direction (L), and
wherein the drive train (47) comprises an electric motor (23) which is arranged in front of the input (21) of the axle drive (11) in the longitudinal direction (L) and which is connected to the input (21) of the axle drive (11).

13. A drive train (47) according to claim 12,
wherein a motor shaft (49) of the electric motor (23) extends parallel to the longitudinal direction (L) of the vehicle, wherein the motor shaft (49) of the electric motor (23) preferably extends coaxially to the drive shaft section (19).

## Revendications

1. Entraînement d'essieu (11) pour un véhicule à direction articulée, qui comprend au moins un premier essieu de véhicule (13) apte à être entraîné et un deuxième essieu de véhicule (15) apte à être entraîné ainsi qu'un joint articulé (17) prévu entre les deux, comprenant
- une portion d'arbre menant (19) ayant une extrémité côté menant (20) qui forme une entrée (21) pour recevoir une puissance motrice d'un moteur électrique (23),
- un arbre mené (25) ayant une extrémité côté mené (27) sur laquelle est disposé un pignon conique (29) destiné à être couplé en entraînement au premier essieu de véhicule (13), et
- un arbre traversant (31) ayant une extrémité côté mené (32) qui forme une sortie (33) destinée à être couplée en entraînement au deuxième essieu de véhicule (15) ;
dans lequel
l'entrée (21) et la sortie (33) de l'entraînement d'essieu (11) sont disposées de manière opposée l'une à l'autre par rapport à une direction longitudinale (L) du véhicule, et la sortie (33) est disposée en aval de l'entrée (21) par rapport à la direction longitudinale (L),
la portion d'arbre menant (19), l'arbre mené (25) et l'arbre traversant (31) sont orientés parallèlement à la direction longitudinale (L),
la portion d'arbre menant (19) est couplée ou peut être couplée en entraînement à la fois à l'arbre mené (25) et à l'arbre traversant (31), de sorte qu'un flux de puissance motrice qui traverse l'entraînement d'essieu (11) à partir de l'entrée (21) se ramifie au niveau d'un point de ramification (V) en un premier flux partiel allant vers la sortie (33) et en un deuxième flux partiel allant vers le pignon conique (29), afin de transmettre la puissance motrice reçue au moins proportionnellement vers le premier essieu de véhicule (13) et/ou vers le deuxième essieu de véhicule (15),
le point de ramification (V) du flux de puissance motrice est prévu en amont du pignon conique (29) par rapport à la direction longitudinale (L) du véhicule, et
l'arbre traversant (31) est décalé verticalement par rapport à l'arbre mené (25) de manière à passer au-dessus ou au-dessous du premier essieu de véhicule (13), et
la portion d'arbre menant (19), l'arbre mené (25) et l'arbre traversant (31) sont disposés à l'intérieur d'un boîtier commun (45),
**caractérisé en ce que**
le moteur électrique (23) est disposé directement sur le boîtier (45).

2. Entraînement d'essieu (11) selon la revendication 1,
dans lequel la portion d'arbre menant (19) est disposée soit coaxialement à l'arbre mené (25) soit coaxialement à l'arbre traversant (31).

3. Entraînement d'essieu (11) selon la revendication 1 ou 2,
dans lequel la portion d'arbre menant (19) est couplée en entraînement à l'arbre mené (25) en permanence.

4. Entraînement d'essieu (11) selon l'une des revendications précédentes, dans lequel l'arbre mené (25) et l'arbre traversant (31) sont couplés en entraînement l'un à l'autre par l'intermédiaire d'un étage d'engrenage cylindrique (35).

5. Entraînement d'essieu (11) selon l'une des revendications précédentes, dans lequel le pignon conique (29) est disposé entre l'entrée (21) et la sortie (33) par rapport à la direction longitudinale (L) du véhicule.

6. Entraînement d'essieu (11) selon l'une des revendications précédentes, dans lequel l'extrémité côté mené (27) de l'arbre mené (25), sur laquelle est disposé le pignon conique (29), est dirigée dans la direction longitudinale (L) du véhicule.

7. Entraînement d'essieu (11) selon l'une des revendications précédentes, dans lequel la direction longitudinale (L) du véhicule est dirigée dans un sens de marche avant (F) du véhicule, ou la direction longitudinale (L) est dirigée dans le sens opposé au sens de marche avant (F) du véhicule.

8. Entraînement d'essieu (11) selon l'une des revendications précédentes,
dans lequel l'entraînement d'essieu (11) comprend un différentiel (37) pour répartir au moins une partie de la puissance motrice sur deux demi-arbres (51, 53) du premier essieu de véhicule (13), le différentiel (37) étant couplé en entraînement à l'arbre mené (25) par l'intermédiaire du pignon conique (29) ;
le différentiel (37) est de préférence disposé entre l'entrée (21) et la sortie (33) par rapport à la direction longitudinale (L) du véhicule.

9. Entraînement d'essieu (11) selon l'une des revendications précédentes,
dans lequel la portion d'arbre menant (19) est reliée à l'arbre mené (25) et/ou à l'arbre traversant (31) par l'intermédiaire d'un engrenage réducteur (39) ; et/ou
la portion d'arbre menant (19) est couplée en entraînement à l'arbre mené (25) et/ou à l'arbre traversant (31) par l'intermédiaire d'un différentiel longitudinal (41).

10. Entraînement d'essieu (11) selon l'une des revendications précédentes, dans lequel un embrayage de séparation (43) est prévu entre la portion d'arbre menant (19) et l'arbre traversant (31).

11. Entraînement d'essieu (11) selon l'une des revendications précédentes, dans lequel l'entraînement d'essieu (11) présente un frein de stationnement qui est relié à l'arbre traversant (31) en termes de freinage.

12. Train d'entraînement (47) d'un véhicule à direction articulée, comprenant un premier essieu de véhicule (13) apte à être entraîné et un deuxième essieu de véhicule (15) apte à être entraîné, qui sont reliés entre eux par un joint articulé (17) disposé entre le premier essieu de véhicule (13) et le deuxième essieu de véhicule (15), ainsi qu'un entraînement d'essieu (11) pour entraîner le premier essieu de véhicule (13) et le deuxième essieu de véhicule (15), l'entraînement d'essieu (11) comprenant
- une portion d'arbre menant (19) ayant une extrémité côté menant (20) qui forme une entrée (21) pour recevoir une puissance motrice d'un moteur électrique (23),
- un arbre mené (25) ayant une extrémité côté mené (27) sur laquelle est disposé un pignon conique (29) destiné à être couplé en entraînement au premier essieu de véhicule (13), et
- un arbre traversant (31) ayant une extrémité côté mené (32) qui forme une sortie (33) destinée à être couplée en entraînement au deuxième essieu de véhicule (15) ;
dans lequel
l'entrée (21) et la sortie (33) de l'entraînement d'essieu (11) sont disposées de manière opposée l'une à l'autre par rapport à une direction longitudinale (L) du véhicule, et la sortie (33) est disposée en aval de l'entrée (21) par rapport à la direction longitudinale (L),
la portion d'arbre menant (19), l'arbre mené (25) et l'arbre traversant (31) sont orientés parallèlement à la direction longitudinale (L),
la portion d'arbre menant (19) est couplée ou peut être couplée en entraînement à la fois à l'arbre mené (25) et à l'arbre traversant (31), de sorte qu'un flux de puissance motrice qui traverse l'entraînement d'essieu (11) à partir de l'entrée (21) se ramifie au niveau d'un point de ramification (V) en un premier flux partiel allant vers la sortie (33) et en un deuxième flux partiel allant vers le pignon conique (29), afin de transmettre la puissance motrice reçue au moins proportionnellement vers le premier essieu de véhicule (13) et/ou vers le deuxième essieu de véhicule (15),
le point de ramification (V) du flux de puissance motrice est prévu en amont du pignon conique (29) par rapport à la direction longitudinale (L) du véhicule, et
l'arbre traversant (31) est décalé verticalement par rapport à l'arbre mené (25) de manière à passer au-dessus ou au-dessous du premier essieu de véhicule (13), et
le joint articulé (17) est relié à la sortie (33) de l'entraînement d'essieu (11) et est disposé en aval de la sortie (33) dans la direction longitudinale (L), et le train d'entraînement (47) comprend un moteur électrique (23) qui est disposé en amont de l'entrée (21) de l'entraînement d'essieu (11) dans la direction longitudinale (L) et qui est raccordé à l'entrée (21) de l'entraînement d'essieu (11).

13. Train d'entraînement (47) selon la revendication 12,
dans lequel un arbre moteur (49) du moteur électrique (23) s'étend parallèlement à la direction longitudinale (L) du véhicule, l'arbre moteur (49) du moteur électrique (23) s'étendant de préférence coaxialement à la portion d'arbre menant (19).
